# EUROPÄISCHE PATENTSCHRIFT

(11) **EP 1 022 059 B1**
(45) Veröffentlichungstag und Bekanntmachung des Hinweises auf die Patenterteilung: **28.08.2002**
(21) Anmeldenummer: 00108592.7
(22) Anmeldetag: 12.09.1995
(51) Int. Cl.: B01L 7/00, C12Q 1/68, B01L 3/00

(54) **Miniaturisierter Fluss-Thermocycler**
Miniaturised flow thermocycler
Thermocycleur de flux miniaturisé

(30) Priorität: 30.09.1994 DE 4435107
(43) Veröffentlichungstag der Anmeldung: 26.07.2000
(62) Teilanmeldung aus: 95932718.0
(73) Patentinhaber: BIOMETRA BIOMEDIZINISCHE ANALYTIK GMBH, 37079 Göttingen (DE)
(72) Erfinder: Baier, Volker, 07745 Jena (DE); Bodner, Ulrich, 81249 München (DE); Dillner, Ulrich, 07743 Jena (DE); Köhler, Johann Michael, 07751 Golmsdorf (DE); Poser, Siegfried, 07749 Jena (DE); Schimkat, Dieter, D-76275 Ettlingen (DE)
(74) Vertreter: Ruttensperger, Bernhard, Dipl.-Phys.

(56) Entgegenhaltungen:
- WO-A-91/16966
- WO-A-92/13967
- WO-A-93/22058
- WO-A-94/05414
- FR-A- 2 650 657

## Beschreibung

Die Erfindung betrifft einen miniaturisierten Fluß-Thermocycler, der bei thermisch zu kontrollierenden, biochemischen bzw. molekularbiologischen Prozessen, insbesondere beim Verfahren der sogenannten Polymerase-Ketten-Reaktion, bei dem aus einem Gemisch von DNA-Sequenzen bestimmte Sequenzen vervielfacht werden, Anwendung findet.

Bei der Durchführung von thermisch kontrollierten, biochemischen bzw. molekularbiologischen Prozessen sind häufig Prozeßschritte mit unterschiedlicher Temperaturbeaufschlagung erforderlich. Von besonderer Bedeutung sind solche wechselnden Temperaturbeaufschlagungen bei der sogenannten Polymerase-Ketten-Reaktion.
Das Verfahren der Polymerase-Ketten-Reaktion ist in den letzten Jahren zur Vervielfachung bestimmter DNA-Sequenzen entwickelt worden und in seinen Grundsätzen von Darnell, J.; Lodish, H.; Baltimore, D. in "Molekulare Zellbiologie, Walter de Gruyter, Berlin-New York 1994, S. 256/257" ausgeführt. Unter anderem ist bei diesem Verfahren wesentlich, daß Gemische aus DNA-Sequenzen einer definierten Temperaturwechselbehandlung unterworfen werden. Dazu finden stationäre Probenbehandlungsapparaturen Verwendung, bei denen die entsprechenden Proben in Probenkammern eingegeben und periodisch einem Warm-Kalt-Temperaturzyklus unterworfen werden, wobei sich je nach definiert vorgegebenen Primern die jeweils gewünschten DNA-Sequenzen vervielfachen. Die Effektivität bislang bekannter Probenkammern wird dabei als nicht ausreichend angesehen. Aus diesem Grund ist in jüngster Zeit eine miniaturisierte Probenkammer vorgeschlagen worden (Northrup et al, DNA Amplification with Microfabricated reaction chamber, 7th International Conference on Solid State Sensors and Actuators, Proc. Transducers 1993, S. 924-26), die eine vierfach schnellere Vervielfachung gewünschter DNA-Sequenzen gegenüber bekannten Anordnungen ermöglicht. Diese bis zu 50 µl Probenflüssigkeit aufnehmende Probenkammer besteht aus einer strukturierten Siliziumzelle mit einer Längsausdehnung in der Größenordnung von 10 mm, welche in einer Probenangriffsrichtung von einer dünnen Membran abgeschlossen ist, über die die entsprechende Temperaturbeaufschlagung mittels miniaturisierter Heizelemente erfolgt. Auch bei dieser Vorrichtung wird die zu vervielfachende DNA-Sequenz über Mikrokanäle in die Kammer eingebracht, einer Polymerase-Ketten-Reaktion unterworfen und anschließend wieder abgezogen. Trotz der mit dieser Vorrichtung erzielten Vorteile haftet ihr im wesentlichen der Nachteil an, daß auch diese Probenkammer als Ganzes beheizt und gekühlt werden muß, womit sich nur begrenzte Temperaturwechselraten erreichen lassen. Insbesondere bei weiterer Reduzierung der Probengröße fällt dabei die parasitäre Wärmekapazität der Probenkammer und ggf. eines notwendigen Temperierblocks gegenüber der Probenflüssigkeit immer stärker ins Gewicht, so daß die prinzipiell bei kleinen Flüssigkeitsvolumina denkbaren hohen Temperaturwechselraten nicht erreicht werden können, wodurch die Effektivität des Verfahrens relativ gering bleibt Darüber hinaus ist zwecks Erreichung jeweils konstanter Temperaturregimes für die Probenflüssigkeit ein relativ aufwendiger Steuer- und Regelaufwand erforderlich, wobei die erbrachte Heiz- bzw. Kühlleistung im wesentlichen nicht in der Probenflüssigkeit, sondern in den sie umgebenden Baugruppen verbraucht wird.
Desweiteren ist aus US-PS 5,270,183 ein im Durchflußprinzip arbeitender Thermocycler bekannt geworden. bei dem die zu amplifizierende Probenflüssigkeit durch eine Rohrleitung geschickt wird, welche nacheinander um mehrere, auf unterschiedlichen Temperaturen gehaltene Zylinder ein oder mehrfach aufgewickelt ist. Grundsätzlich sind mit einer solchen Ausbildung auch relativ kleine Probenmengen, bis herunter zu ca. 25 µl, amplifizierbar. Eine derartige Vorrichtung ist in ihrer Handhabung jedoch recht unpraktikabel und erfordert eine hohe Kunstfertigkeit vom Gerätehersteller, so daß sie für eine Serienfertigung gänzlich ungeeignet ist.

Der Erfindung liegt die Aufgabe zugrunde, einen miniaturisierten Thermocycler anzugeben, der thermisch kontrollierte, biochemische bzw. molekularbiologische Prozesse, insbesondere das Verfahren der Polymerase-Ketten-Reaktion, effektiver als nach dem Stand der Technik durchführen läßt, der das Problem parasitärer Wärmekapazitäten umgeht und der sich kostengünstig herstellen läßt.

Erfindungsgemäß wird die Aufgabe durch die Kennzeichen der Patentansprüche gelöst. Der Erfindung liegt der Gedanke zugrunde, aus der sogenannten Mikrosystemtechnik bekannte Strukturierungstechnologien anzuwenden, um eine Probenaufnahmekammer zu schaffen, die eine dynamische Probenbehandlung auch sehr kleiner Mengen, z.T. sehr teurer, Materialien, ermöglicht.
Durch die erfindungsgemäße Gestaltung des Probenaufnahmebereiches ist weiterhin gewährleistet, daß die in jeweils vorgesehenen Heiz- und Kühlzonen gerade einer Behandlung unterworfenen Probenteilvolumina einen homogenen Temperaturdurchsatz erfahren, was ebenfalls eine Ausbeuteerhöhung der zu amplifizierenden Substanz bewirkt. Weiterhin wird durch den anordnungsbedingten Wegfall von Heiz- und Kühlprozessen der Wandungsmaterialien und die drastische Minimierung parasitärer Wärmekapazitäten und Wänneeinflüsse nicht nur ein erheblich geringerer Steuer- und Regelaufwand erforderlich, sondern der Gesamtprozeßdurchlauf erfährt auch eine wesentliche Zeitverkürzung. Dabei braucht jeweils nur soviel Heiz- und Kühlleistung eingespeist zu werden, wie im Probenflüssigkeitsstrom transportiert wird. Darüber hinaus ermöglicht die erfindungsgemäße Thermocyclerausbildung nicht nur eine kontinuierliche Prozeßführung, sondern auch einen seriellen Betrieb, indem unterschiedliche Substanzen nacheinander dem Thermocycler zuführbar sind, ohne daß es zu störenden Vermischungen mit der noch in der Anordnung befindlichen Probe kommen würde, was sich problemlos durch Einbringung eines kleinen Gaspuffervolumens bewerkstelligen läßt. Alle genannten Vorteile gewährleisten ebenso, daß das Verfahren der Polymerase-Ketten-Reaktion automatisiert durchgeführt werden kann. Weiterhin ergibt sich eine leichte Kombinierbarkeit mit anderen Verfahren, wie z.B. der Mikro-Gel-Elektrophorese, Mikro-Kapillar-Chromatografie und anderen Mikro-Trenn- und Charakterisierungsverfahren.

Zur näheren Illustration der Erfindung sollen nachfolgende Ausführungsbeispiele dienen. Es zeigen:
- Fig. 1: eine Draufsicht auf eine Probenkammer, bei der ein Probenflüssigkeitsweg durch mikrostrukturierte Flußwege gebildet ist und
- Fig. 2: einen seitlichen Schnitt durch eine Probenkammer gemäß Fig. 1.

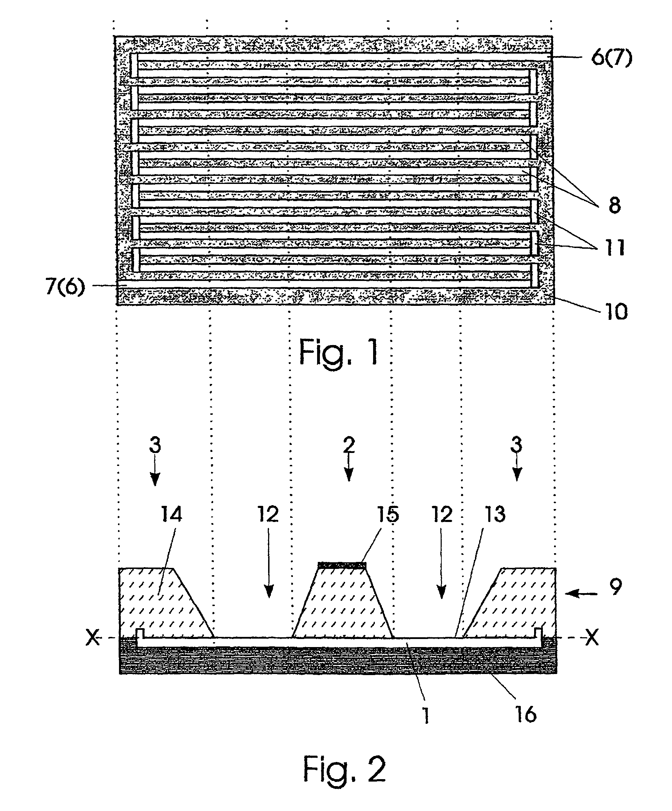

In Figur 1 ist eine Probenkammer, bei der ein Probenflüssigkeitsweg durch mikrostrukturierte Flußwege gebildet ist, schematisch dargestellt. Figur 2 zeigt diese Ausbildung nicht maßstäblich im seitlichen Schnitt. Bei dieser Ausführungsform sind in eine ca. 10 · 15 mm große und 500 µm dicke Platte 10, aus Silizium oder Glas bestehend, Gräben 8, die im Beispiel parallel ausgeführt sind, durch naßchemisches Ätzen eingebracht. Ebenso können statt genannter Gräben 8 auch vollständige Durchbrüche vorgesehen sein, wobei der verbleibende Rahmen dann einseitig ganzflächig mit einer geschlossenen Platte zu verschließen wäre. Die offen liegenden Grabenbereiche werden im Beispiel im weiteren von einer Abdeckung 9, die die Baugruppen oberhalb einer Achse X-X, wie in Fig. 2 dargestellt, umfaßt, verschlossen. Die Abdeckung 9 ist dabei in erfindungsgemäßer Weise aus einem Siliziumplättchen oder einem anderen Material guter Wärmeleitfähigkeit gebildet, in das im Beispiel zwei thermisch isolierende Kehlungen 12 eingebracht sind. Diese Kehlungen 12 bilden an ihrer Basis einen membranartigen Abschluß 13, der die Grabenbereiche, die die Verweilzonen der Probenflüssigkeit zwischen Heiz- und Kühlzonen bilden, abdeckt und ca. 1 µm dick ist. In der Figur 2 ist der mittlere Siliziumsteg mit einem Dünnschichtheizelement 15 versehen, mittels dessen die Probenaufheizung an der gegenüberliegenden Stegbasis realisiert wird. Über die im Beispiel verbleibenden zwei äußeren Siliziumstege wird jeweils eine thermostatisierte, nicht näher dargestellte Kühlung vorgenommen. Ein durchgängiger Probenfluß ist im Beispiel durch in die Abdeckung 9 eingebrachte Überbrückungskanäle 11 gewährleistet, die wechselseitig Einzelgrabenanfänge mit den jeweils benachbarten Einzelgrabenenden verbinden. Erforderliche Zu- und Abläufe sind entweder in der Platte 10 (wie in Figur 1 angedeutet) oder die Abdeckung 9 einbringbar. Die beschriebene Gesamtvorrichtung ist im Beispiel mit einem Träger 16 versehen, der aus einem Glas mit niedriger Wärmeleitfähigkeit gefertigt ist. Im Beispiel sind den Einzelgräben 8 Grabenbreiten von 500 µm und Grabenlängen von etwas unter 100 mm bei Grabentiefen von 400 µm gegeben, wodurch sich inclusive der Wege für die Überbrückungskanäle eine Gesamtgrabenlänge von 0,4 m ergibt. Dabei sind sinnvollerweise Probenvolumina von ca. 10 bis 200 µl in den Fluß-Thermocycler einbringbar, was bisher üblichen Probenmengen entspricht. Da durch die angegebenen Grabendimensionierungen die Möglichkeiten der Mikrolithografie bei weitem noch nicht ausgeschöpft sind, sind für gewünschte Anwendungsfälle auch Dimensionierungen bereits heute herstellbar, die die Einbringung eines Probenvolumens in der Größenordnung von 0,1 µl zulassen würden.
Mit dem zu Figur 1 und 2 gehörigen Ausführungsbeispiel sind bei möglichen Flußraten von ca. 0,1 µl/s, bei Probenverweilzeiten in den Heizzonenbereichen von ca. 20 sec, in den Kühlzonenbereichen von 30 sec und in den dazwischenliegenden Zonen von 10 sec, bei einer Einzelgrabenanzahl von 40, Gesamtdurchlaufzeiten zur Amplifizierung mit maximal möglicher Ausbeute von 40 min erreichbar, was eine deutliche Reduzierung unter die bisher bekannt gewordenen geringsten Zeiten bei gleichzeitig erhöhter Ausbeute bedeutet.
In diesem Beispiel kann die Heizzone im Rahmen der Erfindung so ausgebildet sein, daß sie in zwei Teilbereiche derart aufgeteilt ist, daß in Flußrichtung eine erste Heizzone von bspw. 4 mm Breite entsteht, an die sich eine nicht dargestellte thermische Isolationszone von 1 mm und daran eine zweite Heizzone mit 2 mm Ausdehnung anschließt. Auf diese Weise ist genannte erste Heizzone über Einstellung einer entsprechenden Heizleistung mit einer Temperatur von 72°C und die zweite Heizzone mit einer Temperatur von 92°C beaufschlagbar. An genannte zweite Heizzone könnte eine zweite thermische Isolationszone von bspw. 1 mm Ausdehnung folgen, an die sich eine Kühlzone von bspw. 3 mm Ausdehnung anschließt, die durch sekundäre Kühlung auf 55°C gehalten wird. Ein derart ausgebildeter miniaturisierter Thermocycler ist besonders zur Durchführung einer Polymerase-Kettenreaktion geeignet. Dabei wird am Zulauf ein Gemisch aus Template, Nukleosidtriphosphaten, Primern und taq-Polymerase in Pufferlösung appliziert, deren jeweilige Zusammensetzung analog zum bekannten Stand der Technik festgelegt wird. Die Flußrate wird auf ca. 8 µl/min eingestellt, so daß die Verweilzeit je Periode etwa 1 Minute beträgt. Davon entfallen auf genannte erste Heizzone 20 sec, 10 sec auf die zweite Heizzone, 15 sec auf die Kühlzone und jeweils 5 sec auf die thermischen Isolationszonen. Zum Durchlauf des gesamten miniaturisierten Thermocyclers werden damit ca. 40 Minuten benötigt. In dieser Zeit finden in einem Volumenelement von 2 µl vierzig Amplifikationszyklen statt. Bei einer Verlängerung auf 44 Minuten (10% Zeitverlängerung) werden 34 µl amplifiziert.

Die erfindungsgemäße Probenkammer läßt sich problemlos einer Serienfertigung zuführen und ist kostengünstig, bei gleichzeitg großer Vielfalt unterschiedlicher Probenkammergeometrien herstellbar, so daß eine Anpassung für variierende Anwendungsfälle keine weiteren Schwierigkeiten mit sich bringt.

### Bezugszeichenliste

- 1 -: Probenaufnahmebereich
- 2 -: Heizzone
- 3 -: Kühlzone
- 6 -: Zulauf
- 7 -: Ablauf
- 8 -: Graben
- 9 -: Abdeckung
- 10 -: Silizium- oder Glasplättchen
- 11 -: Überbrückungskanäle
- 12 -: isolierende Kehlung
- 13 -: membranartiger Abschluß
- 14 -: Siliziumsteg
- 15 -: Dünnschichtheizelement
- 16 -: Träger
- X-X -: Achse

## Patentansprüche

1. Miniaturisierter Fluß-Thermocycler, einen Probenaufnahmebereich (1) zur Aufnahme und Durchleitung von flüssigen Medien und wenigstens je eine Heizzone (2) und eine Kühlzone (3) beinhaltend, die in thermischem Kontakt zum Probenaufnahmebereich stehen, **dadurch gekennzeichnet, daß** eine Abdeckung (9) vorgesehen ist, die einen mit mäanderförmigen Gräben (8) versehenen Probenaufnahmebereich (1) verschließt und jeweils vergleichbare Grabenabschnitte von voneinander beabstandet angeordneten Heizzonen (2) und Kühlzonen (3) erfaßt sind und der Abdeckung (9) probenflußabseitig zwischen Heizzonen- und Kühlzonenbereichen wenigstens eine thermisch isolierende Kehlung (12) gegeben ist, die in Richtung der Gräben (8) einen membranartigen Abschluß (13) bildet.

2. Miniaturisierter Fluß-Thermocycler gemäß Anspruch 1, **dadurch gekennzeichnet, daß** die Abdeckung (9) aus einem Siliziumplättchen gefertigt ist.

3. Miniaturisierter Fluß-Thermocycler gemäß Anspruch 1, **dadurch gekennzeichnet, daß** genannte Heizzone(n) (2) oder Kühlzone(n) (3) in Probendurchflußrichtung größenordnungsmäßig jeweils gleich lange Probendurchflußabschnitte erfassen.

4. Miniaturisierter Fluß-Thermocycler gemäß Anspruch 1 oder 3, **dadurch gekennzeichnet, daß** zumindest die Heizone(n) (2) in voneinander beabstandete Bereiche aufteilbar ist (sind), die mit unterschiedlichen Temperaturen beaufschlagbar sind.

## Claims

1. Miniaturised flow thermocycler, comprising a sampling region (1) for receiving and transferring liquid media and at least one heating zone (2) and one cooling zone (3) respectively which are in thermal contact with the sampling region, **characterised in that** a cover (9) closing a sampling region (1) equipped with serpentine troughs (8) is provided and respective comparable trough portions are enclosed by heating zones (2) and cooling zones (3) arranged spaced from one another and the cover (9) is provided with at least one thermally insulating channel (12) forming a membrane-like closure (13) in the direction of the troughs (8) on the side remote from the sample flow between heating zone and cooling zone regions.

2. Miniaturised flow thermocycler according to claim 1, **characterised in that** the cover (9) is produced from a silicon plate.

3. Miniaturised flow thermocylcer according to claim 1, **characterised in that** said heating zone(s) (2) or cooling zone(s) (3) each enclose sample flow portions of equal length in order of magnitude in the sample flow direction.

4. Miniaturised flow thermocycler according to claim 1 or 3, **characterised in that** at least the heating zone(s) (2) can be divided into regions which are spaced from one another and can be loaded with different temperatures.

## Revendications

1. Thermocycleur de flux miniaturisé, contenant une zone de prélèvement d'échantillon (1) pour prélever et conduire des liquides ainsi qu'au moins respectivement une zone de chauffage (2) et une zone de refroidissement (3) qui sont en contact thermique avec la zone de prélèvement d'échantillon, **caractérisé en ce qu'**il est prévu un couvercle (9) qui ferme une zone de prélèvement d'échantillon (1) pourvue de sillons (8) en méandres, et des tronçons de sillons comparables sont concernés par des zones de chauffage (2) et des zones de refroidissement (3) disposées espacées les unes des autres, et le couvercle (9) reçoit, côté sortie des échantillons, entre des domaines des zones de chauffage et des zones de refroidissement, au moins une cannelure (12) isolante thermiquement, qui forme une fermeture (13) de type membrane en direction des sillons (8).

2. Thermocycleur de flux miniaturisé selon la revendication 1, **caractérisé en ce que** le couvercle (9) est réalisé dans une plaquette de silicium.

3. Thermocycleur de flux miniaturisé selon la revendication 1, **caractérisé en ce que** la ou les zone(s) citée(s) de chauffage (2) ou de refroidissement (3) concernent, dans le sens de passage des échantillons, des tronçons de passage d'échantillon de même longueur en ordre de grandeur.

4. Thermocycleur de flux miniaturisé selon la revendication 1 ou 3, **caractérisé en ce qu'**au moins la ou les zone(s) de chauffage (2) peut ou peuvent être divisée(s) en domaines espacés les uns des autres qui peuvent être soumis à des températures différentes.
